Europäisches Patentamt

European Patent Office

Office européen des brevets

(11) Veröffentlichungsnummer: **0 368 230**
**A1**

# EUROPÄISCHE PATENTANMELDUNG

(21) Anmeldenummer: **89120570.0**

(22) Anmeldetag: **07.11.89**

(51) Int. Cl.⁵: **F16H 61/30**

(30) Priorität: **08.11.88 DE 3837777**

(43) Veröffentlichungstag der Anmeldung:
**16.05.90 Patentblatt 90/20**

(84) Benannte Vertragsstaaten:
**AT DE ES FR GB IT**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Zenker, Walter
Pippelstein 49
D-5060 Bergisch Gladbach(DE)**

(54) **Hydraulische Getriebeschaltung.**

(57) Hydraulische Getriebschaltungen versehen mit Stellzylindern, die außerhalb des Getriebegehäuses angeordnet sind, erfordern neben einem erhöhten Bauraumbedarf in einem Bereich, dessen Bauraum im Fahrzeug knapp bemessen ist, ein aufwändiges Umlenkgestänge. Die Forderung an eine heute einsetzbare hydraulische Getriebeschaltung lautet daher, die Funktion zu verbessern, bei gleichzeitiger Beibehaltung der äußeren Getriebegehäuseabmessung.

Die kompakte Bauart der Schaltung erhaltend ist vorgesehen, in Längsachse der Schaltstangen (5, 6) jeweils am Ende Stellzylinder (10, 11, 12, 13) anzuordnen, die Doppelkolben mit einem hydraulischen Schleppgestänge aufweisen. Die Zylinderräume (25, 26) der Stellzylinder sind in Abhängigkeit der Schaltstellung des Schalthebels (41) druckbeaufschlagbar durch das Zusammenwirken der Wegeventile (47, 49) bzw. (48, 50), die über Verbindungsleitungen mit der Druckpumpe (45) verbunden sind.

Die vorgestellte hydraulische Getriebeschaltung ermöglicht eine kompakte, zu einer Einheit zusammengefügte Splitgruppe eines Fahrzeuggetriebes einschließlich aller benötigten hydraulischen Stellzylinder.

FIG.1

EP 0 368 230 A1

## Hydraulische Getriebeschaltung

Die Erfindung bezieht sich auf eine Schalthilfe für ein Zahnradwechselgetriebe nach dem Oberbegriff des ersten Anspruchs.

Zur Getriebeschaltung sind, insbesondere bei Fahrzeugen mit hohen Antriebsleistungen, deren synchronisierte Getriebe mit groß dimensionierten Reibflächen der Synchronisiereinrichtungen versehen sind, große Schaltkräfte erforderlich.

Eine rechnerunterstützte Getriebeschaltung wurde in der Zeitschrift "Automotive Engineering" in der Ausgabe Mai 1983 beginnend auf Seite 48 vorgestellt, die mit pneumatischen Stellgliedern und Stellzylindern versehen ist, die außerhalb des Getriebegehäuses angeordnet sind. Die bekannte Getriebeschaltung führt die Schaltung des Schalthebels innerhalb einer vorgegebenen Schaltgasse aus, was bislang vom Fahrer erfolgte. Diese Schalthilfe fordert viel zusätzlichen Bauraum im Bereich des Getriebegehäuses. Zudem sind die außen am Getriebegehäuse angeordneten Steuerungs- und Stellglieder einer Verschmutzung unterworfen, was den Verschleiß fördern und zum völligen Ausfall der Stellglieder führen kann. Außerdem ist eine genaue Justierung des Stellgliedes erforderlich, zur Erreichung einer exakten Führung des Schalthebels in der Schaltgasse.

Der Erfindung liegt die Aufgabe zugrunde, eine Schalthilfe für ein Zahnradwechselgetriebe darzustellen, die keinen zusätzlichen Bauraum benötigt, viele Gleichteile besitzt, keine Gassensteuerung benötigt und eine Sicherung aufweist, damit nicht gleichzeitig zwei Gangstufen geschaltet werden.

Erfindungsgemäß wird die Aufgabe durch die kennzeichnenden Merkmale des ersten Anspruchs gelöst. Durch die erfindungsgemäße Anordnung von jeweils zwei Stellzylindern in der Längsachse einer jeden Schaltstange ergibt sich eine unmittelbare Betätigung der Schaltgabel und damit eine exakte Möglichkeit der Zahnradverschiebung. Die Anordnung der Stellzylinder innerhalb des Getriebegehäuses verlangt keinen zusätzlichen Bauraum beispielsweise außerhalb des Getriebegehäuses und ist außerdem gegen Verschmutzung geschützt. Bei Verwendung der vorliegenden Schalthilfe im Zahnradwechselgetriebe eines Schleppers bietet es sich vorzugsweise an, die Stellzylinder mit dem am Schlepper vorhandenen Hydraulikölkreislauf zu verbinden. Die vorgestellte Schalthilfe eignet sich vorteilhaft zur Verschiebung von Schaltstangen einer Splitgruppe innerhalb eines Fahrzeugschaltgetriebes, wie es insbesondere bei Schleppergetrieben zur Anwendung kommt. Als Splitgruppe wird ein zusätzlich im Schaltgetriebe angeordnetes Untersetzungsgetriebe bezeichnet. Das mit einer Synchronschaltung versehene Untersetzungsgetriebe ermöglicht es, die Geschwindigkeiten des Schaltgetriebes in Stufen zu schalten, um damit eine Vervielfachung der Gänge zu erreichen. Die Anwendung der vorgestellten hydraulischen Schalthilfe in Verbindung mit einer zu schaltenden Splitgruppe bietet den Vorteil, daß keinerlei Gassensteuerung erforderlich ist, da durch die Anordnung der Stellzylinder unmittelbar auf der Schaltstange diese lediglich geradlinig verschoben wird und keinerlei Drehbewegung ausführen muß. Durch das Zusammenwirken von jeweils zwei Stellzylindern auf einer Schaltstange, an der starr und drehfest eine Schaltgabel gekoppelt ist, wird eine exakt arbeitende eine hohe Schaltzuverlässigkeit aufweisende Schaltung erreicht. Diese Anordnung läßt sich selbstverständlich auch auf eine Splitgruppe mit mehreren Gruppen übertragen, indem beispielsweise für je zwei zu schaltende Splitgruppen die auf einer Welle befindlichen Schiebezahnräder durch versetzt bzw. parallel angeordnete und mit den jeweils zuvor beschriebenen Bauteilen versehene Schaltstangen vorgesehen sind. In gleicher Weise ist der Erfindungsgedanke auch übertragbar auf die Schaltung eines Schaltgetriebes. Die erfindungsgemäße Schalthilfe ist insbesondere deshalb geeignet zur Ausführung aller bislang mechanisch vom Fahrer zu schaltenden Gruppen und Gänge beispielsweise eines Schleppergetriebes, da als Stellglieder kleinbauende, rotationssymmetrische Stellkolben Verwendung finden, die problemlos auch an mehreren in einem Getriebeabschnitt unterzubringende Schaltstangen anzubringen und einzubauen sind. Vorteilhaft sieht die Erfindung dazu vor, daß nicht nur der Aufbau, sondern auch die Teile gleich und damit die Stellzylinder untereinander austauschbar sind, wodurch neben einer kostengünstigen Herstellung - ausschließlich Drehteile - ebenfalls die Unterschiedsteile verringert werden.

Nach Anspruch 5 ist vorgesehen, daß durch die Verwendung von zwei Stellzylindern pro Schaltstange drei Schaltpositionen erzielbar sind. Auf die zuvor beschriebene Splitgruppe bezogen, ist damit mit Hilfe der vorgestellten Schaltung eine Verschiebung der Schaltstange neben zwei Endstellungen für eine jeweilige Gruppe auch eine dazwischenliegende Neutralstellung einstellbar. Diese Schaltung wird ermöglicht durch die besondere Gestaltung der Stellzylinder, von denen mindestens einer mit zwei in Grenzen beweglich zueinander verschiebbaren Kolben versehen ist, die lediglich in einer, zueinander übereinstimmenden Richtung einen Anschlag aufweisen und folglich ein hydraulisches Schleppgestänge bilden. Die kompakte Bauform unterstreichend, ist der Stellzylinder als ein die Schaltstange umschießendes zylindrisches Gehäuse ausgebildet, wobei die Schaltstange selber für beide Kolben die Kolbenstange bildet. Die in einer Richtung auf der Schaltstange in unterschiedlichen Abständen in einer Richtung fixierten Kolben erlauben bei entsprechender Druckbeaufschlagung der Zylinderräume die Verschiebung der Schaltstange in verschiedene vorbestimmbare Positionen. Die Kolben eines Stellzylinders weisen vorzugsweise unterschiedlich große als Kreisringflächen ausgebildete Kolbenflächen auf, wodurch vorteilhaft mit dem Stellzylinder eine Vorrangstellbewegung ausgeführt werden kann. Vorteilhaft wird die größere Kolbenfläche dem Kolben zur Stellbewegung der Schaltstange in die Neutralstellung zugeordnet. Damit beispielsweise bei einer evtl. auftretenden Fehlschaltung immer sichergestellt ist, daß nicht gleichzeitig zwei Gänge geschaltet werden können.

Alternativ dazu ist zur Vermeidung einer Fernschaltung auch an die Verwendung einer elektrischen Vorrangschaltung gedacht, bei der mit Hilfe eines Sensors, ausgebildet als Kugelraste in Verbindung mit einem elektrischen Schalter, dieser nur dann geschlossen ist, wenn die Kugelraste in eine dafür vorgesehene Kerbung der Schaltgestänge einrastet, was der Neutralstellung entspricht. Dieser Schaltkontakt kann dazu benutzt werden, daß bei einer beispielsweise parallelen Anordnung von zwei Schaltstangen der Stellzylinder für die Stellbewegung der Schaltstange (a) nur beaufschlagt werden kann, wenn sich die Schaltstange (b) in Neutralstellung befindet.

Aus dem Anspruch 11 ist das Zusammenwirken zwischen dem die Schaltung auslösendem Schalthebel und den die Stellbewegung ausführenden Stellzylindern nahegelegt. Danach ist vorgesehen, daß mit Hilfe des Schalthebels in jeder Rastung ein elektrischer Kontakt zwischen einer Spannungsquelle und elektromagnetisch betätigten Wegeventilen erfolgt, die in Abhängigkeit einer Vorrangschaltung den von einer Druckpumpe erzeugten Förderstrom entsprechend der vorgewählten Schalthebelposition einen bestimmten Zylinderraum zur Ausführung der gewünschten Stellbewegung zuführt, wobei gleichzeitig die Zylinderräume zur Erreichung der Neutralstellung für die Schaltstange der nicht betätigten Schaltstange ebenfalls druckbeaufschlagt werden.

Zur Erreichung einer kompakten Bauweise ist weiter daran gedacht, die jeweils zusammenwirkenden Wegeventile zu einer Einheit zusammenzufügen und als ein Steckmodul auszubilden, was vorteilhaft einsetzbar ist in das Getriebegehäuse. Diese auch als Cartige-Einschraubpatronen bezeichneten Steckmodule benötigen vorteilhaft keinerlei Verbindungen zwischen den einzelnen Wegeventilen. Die vorgestellte hydraulische Schalthilfe gestattet es weiter, beispielsweise die gesamte Splitgruppe eines Getriebes einschließlich der hydraulischen Schalthilfe als Einschubeinheit auszubilden, wodurch im Schadensfall die gesamte Einheit beispielsweise durch eine Austauscheinheit ersetzt werden kann und somit die Ausfallzeit des Fahrzeuges vorteilhaft verringert werden kann. Durch die Kombination einer solchen Einschubeinheit mit den zuvor beschriebenen Steckmodulen kann, nahezu auf alle hydraulischen Verbindungsleitungen verzichtet werden, da diese mit in die Wandung des Getriebegehäuses einbezogen werden können.

Weitere Merkmale der Erfindung ergeben sich aus der Figurenbeschreibung, die ausführlich die in den Zeichnungen dargestellten Ausführungsbeispiele erläutert.

Weiter bietet sich die erfindungsgemäße Schalthilfe in Fahrzeugen an, die mit einem Antriebsstrang-Management (ASM) versehen sind. Das "ASM" bezeichnet ein mit einer Rechnereinheit verbundenes aufeinander abstimmbares Zusammenwirken des Antriebsmotors und Antriebsstrangs (Getriebe), wozu sich die vorliegende Schalthilfe ideal anbietet durch die elektrische Aussteuerbarkeit.

Es zeigt:

Fig. 1: den hydraulischen Schaltplan der Getriebeschaltung, aus der das Zusammenwirken der einzelnen Bauteile hervorgeht,

Fig. 2: den erfindungsgemäßen doppelt wirkenden Hydraulikzylinder im Schnitt gezeichnet,

Fig. 3: die Anordnung der doppelt wirkenden Stellzylinder innerhalb eines Schaltgetriebes,

Fig. 4: die Darstellung von drei zu einer Einheit zusammengefügten Wegeventilen in einer Vorderansicht,

Fig. 5: die Wegeventileinheit gemäß Fig. 4 in der Seitenansicht.

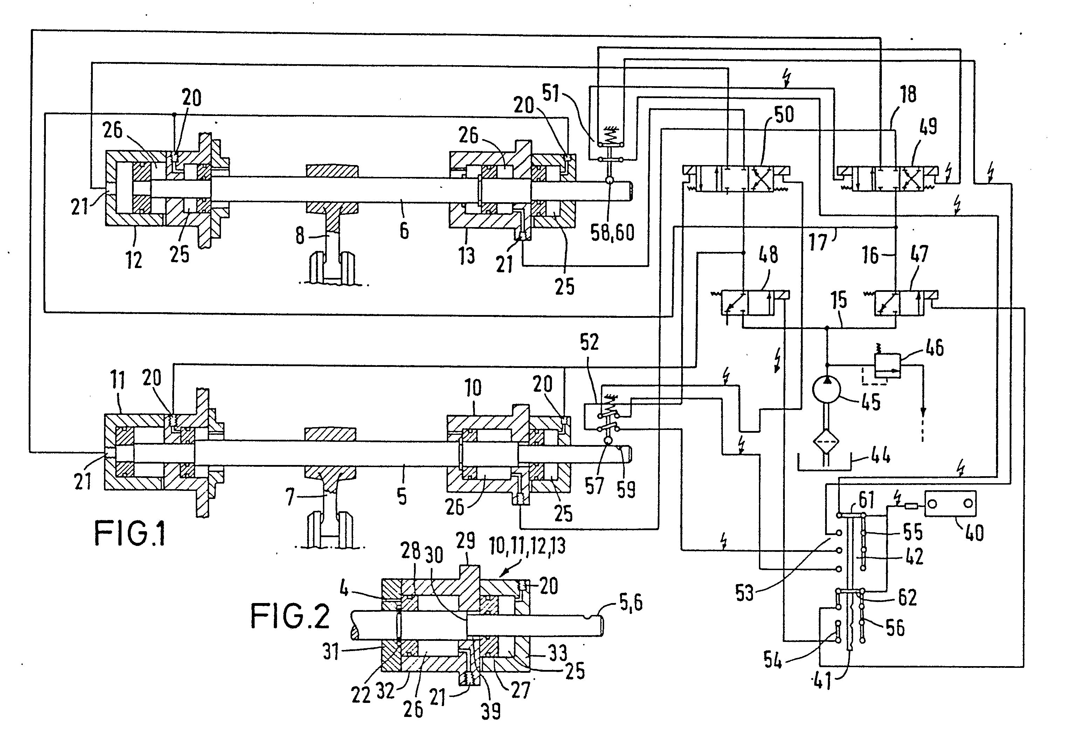

Der Fig. 1 ist ein Schaltplan zu entnehmen für eine hydraulisch geschaltete Splitgruppe für ein in einem Schlepper eingesetztes Wechselgetriebe. Die Verschiebung der Schaltgabeln 7, 8 erfolgt über elektrisch angesteuerte hydraulische Wegeventile 47, 48, 49, 50, die über hydraulische Druckleitungen mit den Stellzylindern verbunden sind. Die Stellzylinder 10, 11, 12, 13 befinden sich dabei jeweils in der Längsachse endseitig der Schaltstangen 5, 6 und sind so angeordnet, daß bei entsprechender Schalthebelbetätigung eine der Schaltstangen 5, 6 axial verschoben wird.

Der Aufbau sieht vor, daß an den Kontaktschienen 55, 56 für die Schaltgruppen I bis IV bzw. die Neutralstellungen N1/2 und N3/4 eine elektrische Spannung von der Spannungsquelle 40 anliegt. Entsprechend der vorgewählten Stellung des Schalthebels 41 erfolgt eine elektrische Verbindung zwischen der Kontaktschiene 55 und der jeweiligen Raststelle 53. Die vorliegende Schaltung sieht dabei vor, daß eine Schaltstangenbewegung erst dann erfolgen kann, wenn die nicht betätigte Schaltstange sich in der Neutralstellung befindet. Diese Kontrolle erfolgt mit Hilfe der Sensoren 51, 52, die versehen mit einer Kugelraste 57, 58 mit einer Einkerbung 59, 60, die endseitig in der Schaltstange 5, 6 eingebracht sind, zusammenwirken. Nur bei eingerastetem Sensor 51, 52 erfolgt ein Kontakt und damit die elektrische Verbindung zum 3/3-Wegeventil 49, 50 durch die eine Verschiebung entsprechend der durch den Schalthebel 41 vorgewählten Position und dem damit verbundenen ungehinderten Druckmittelstrom zu den Stellzylindern 10, 11, 12, 13. Der anstehende Druckmittelstrom an den 3/3-Wegenventilen 49, 50 wird gesteuert durch die am Schalthebel 41 angebrachte Verbindung 62, die bei einer Neutralstellung der jeweils anderen als der zu schaltenden Schaltstange 5, 6 das entsprechende 3/2-Wegeventil 47, 48 verschiebt in eine Position, bei der das Druckmittel von der Druckpumpe 45 den 3/3-Wegeventilen 49, 50 zuströmen kann.

Funktionsweise der hydraulischen Schaltung:

Die erfindungsgemäße hydraulische Fernschaltung in Verbindung mit elektromagnetisch betätigten Wegeventilen ist versehen mit einer Kontrolleinrichtung in Form von Sensoren 51, 52, die Fehlschaltungen vermeiden soll. Ein Wechsel der Splitgruppe erfolgt, indem der Schalthebel 41 zwischen den Raststellen 53, 54 bestimmt für die Schaltgruppen I bis IV bzw. den entsprechenden Neutralstellungen, der nicht zu schaltenden Schaltstange 5, 6 verschoben wird. Ausgehend vom vorliegenden Beispiel (Fig. 1) wird durch Schaltung des Schalthebels 41 in die Position II der Raststelle 53 über die Verbindung 61 ein elektrischer Kontakt zum Sensor 51 geschlossen, über den die Lageposition der nicht zu schaltenden Schaltstange 6 geprüft wird. Befindet sich die Schaltstange 6 in Neutralstellung (N), ist der als Schalter ausgebildete Sensor 51 geschlossen und stellt somit eine elektrische Verbindung mit dem am 3/3-Wegeventil 49 angeordneten Elektromagneten her, der eine Verschiebung des 3/3-Wegeventils 49 axial vom 3/3-Wegeventil verschoben wird. Die gleichzeitig verschobene Verbindung 62 am Schalthebel 41 wird parallel zu der zuvor beschriebenen elektrischen Schaltung ebenfalls über ein Elektromagnet, das 3/2-Wegeventil 47 in die entgegengesetzte Endlage verschoben und damit das in der Druckmittelleitung 15 von der Druckpumpe 45 geförderte Druckmittel durch die Verbindung 16 zum 3/3-Wegeventil 49 gelangt. Die Verbindung 16 ist mit einer Abzweigung 17 versehen, durch die der anstehende Druck in der Verbindung 16 auf die Zylinderräume 25 der Stellzylinder 12, 13 übertragen wird zur Verstellung der Schaltstange 6 in die Neutralstellung. Wie zuvor beschrieben, ist der als Schalter ausgebildete Sensor 51 in der Neutralstellung der Schaltstange 6 geschlossen, wodurch das 3/3-Wegeventil 49 in eine Position gebracht wird, in der die Druckleitungen, die Verbindung 16 mit der Zuführleitung 18 verbunden werden, wodurch über den Anschluß 21 des Stellzylinders 10 der Zylinderraum 26 beaufschlagt wird und somit die Schaltstange 5 axial in Richtung Stellzylinder 11 verschoben. In gleicher Weise wie der zuvor beschriebene Schaltvorgang werden auch die weiteren Schaltgruppen geschaltet, wobei zur Schaltung der Splitgruppen III und IV das 3/3-Wegeventil 50 mit dem 3/2-Wegeventil 48 zusammenwirkt. Zum Aufbau des Drucks in der Druckmittelleitung 15 entnimmt die Druckpumpe 45 das Fördermedium aus dem Hydrauliköltank 44. Ein Druckbegrenzungsventil 46 ist in einem Bypaß zur Druckmittelleitung 15 geschaltet und steuert einen aufkommenden Überdruck ab.

Die Fig. 2 zeigt in einer Einzeldarstellung einen im Schnitt dargestellten Stellkolben 10, 11, 12, 13. Der erfindungsgemäße Stellzylinder ist als Doppelkolben und als Besonderheit mit einem hydraulischen Schleppgestänge versehen, wodurch vorteilhaft die Baulänge des Stellzylinders verkürzt werden kann. Alle Bauteile des Stellzylinders 10, 11, 12, 13 sind rotationssymmetrisch ausgebildet, wobei die Zylindergehäuse 32, 33 vorteilhaft als Drehteile herzustellen sind. Die Zylindergehäuse 32, 33 besitzen gleiche Zylinderdurchmesser und stellen einseitig offene Drehelemente dar, die lösbar zusammengefügt sind. Dabei ist das Zylindergehäuse 32 mit einem als Trennwand 29 bezeichneten Boden versehen, in der die mittig durch die Stellzylinder 10, 11, 12, 13 verlaufenden Schaltstange 5, 6 mittig verschiebbar gelagert ist und der außerdem in einem nach außen ragenden Vorsprung der Anschluß 21 für die Druckbeaufschlagung des Zylinderraumes 26 vorgesehen ist. Auf der von Zylindergehäuse 32 gegenüberliegenden Seite der Trennwand 29 schließt sich das Zylindergehäuse 33 an, das im Boden einen Durchbruch für die Schaltstange 5, 6 aufweist sowie den Anschluß 20 für die Druckbeaufschlagung des Zylinderraums 25. Der Zylinderraum 26 wird gegenüberliegend von der Trennwand 29 durch einen Stirndeckel verschlossen, durch den mittig die Schaltstange 5, 6 geführt ist und der außerdem eine Entlüftung 4 aufweist. Die Schaltstange 5, 6 ist mit einer Wellenstufung 30 versehen, die bewirkt, daß bei gleichem Durchmesser der Zylindergehäuse 32, 33 unterschiedliche Kolbenflächen entstehen, die verschieden große Stellkräfte bewirken zur Verschiebung der Schaltstange 5, 6. Die Kolben 23, 24 sind kreisringförmig ausgebildet und verschiebbar auf der Schaltstange 5, 6 angeordnet. Die Kolben 27, 28 stellen somit ein hydraulisches Schleppgestänge dar, wodurch vorteilhaft bei einer Stellbewegung der Schaltstange 5, 6 nicht gleichzeitig alle Kolben den vollen Stellweg nach vollziehen müssen, und damit die Stellkräfte verringert und der Verschleiß der Abdichtungen zwischen Kolben und Zylindergehäuse verringert wird.

Durch die erfindungsgemäße Konstruktion mit Doppelkolben, wobei diese mit einem hydraulischen Schleppgestänge verbunden sind, ergibt sich vorteilhaft die Möglichkeit, daß bei Anordnung von zwei Stellzylindern für eine zu bewegende Schaltstange neben zwei Endlagen auch eine Zwischenstellung (Neutralstellung) erreicht werden kann.

Die in Fig. 2 dargestellte Schaltstangenposition entspricht einer Druckbeaufschlagung des Zylinderraumes 26, da der Kolben 28 am Stirndeckel 31 anliegt. In dieser Schaltstangenposition wird deutlich, daß der Kolben 28 mit Hilfe des auf der Schaltstange 5, 6 fest angeordneten Mitnehmers 22 die Schaltstange 5, 6 in eine Endlage verschoben hat. Der maximale Stellweg der Schaltstange 5, 6 entspricht dem Abstand zwischen dem Kolben 28 und der Trennwand 29. In dieser entgegengesetzten Endlagenstellung ist der Kolben 27 bis an die Endwand des Zylindergehäuses 33 verschoben und gleichzeitig der Kolben 28 bis an die Trennwand 29. Eine erreichbare Zwischenstellung ist erzielbar, indem der Zylinderraum 25 druckbeaufschlagt wird und der Kolben 27 angelegt an die Wellenstufe 30 die Schaltstange 5, 6 axial verschiebt bis zur Anlage des Kolbens 27 an der Trennwand 29. Der Stellweg für die Zwischenposition entspricht dem Abstand 39, der sich bildet in der in Fig. 2 dargestellten Schaltstangenposition 5, 6 zwischen der Wellenstufe 30 und dem Kolben 27.

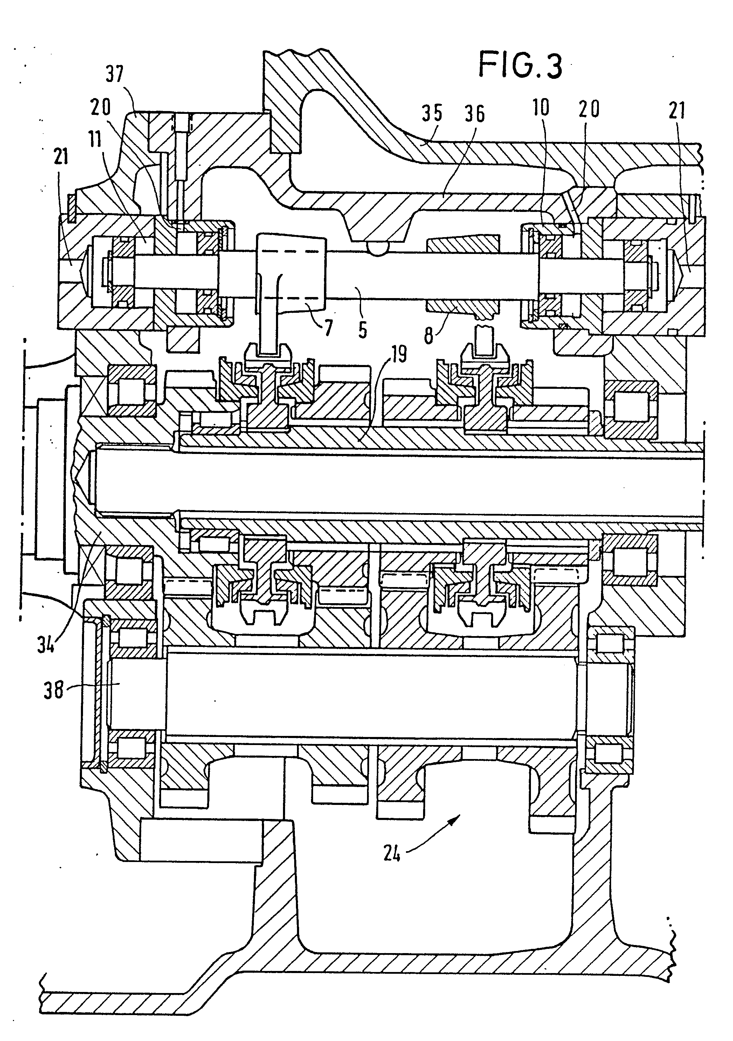

Die Einbauverhältnisse der neu vorgestellten hydraulischen Getriebeschaltung in ein herkömmliches Schaltgetriebe verdeutlicht Fig. 3. Zu beachten ist dabei insbesondere, daß die neue Schaltung in ein vorhandenes Getriebegehäuse zu integrieren ist, da der für die hydraulische Schaltung benötigte Bauraum nahezu identisch mit der bislang bekannten mechanischen Betätigung der Schaltgabel 7, 8 ist. Die in Fig. 3 dargestellte Splitgruppe 24 ist als eine in einem Einschubgehäuse 36 eingebrachte Einheit ausgebildet, die vormontiert komplett in das Getriebegehäuse 35 einschiebbar ausgebildet ist. Diese Ausgestaltung bietet neben einer schnelleren Montage die Möglichkeit einer Vormontage außerdem im Schadensfall kurze Ausfallzeiten des Fahrzeugs, da im Schadensfall der Splitgruppe diese komplett ersetzt werden kann durch eine neue bzw. Austauschsplitgruppe.

Der Kraftfluß in dieser in Fig. 3 dargestellten Splitgruppe 24 erfolgt ausgehend von der mit dem Antriebsmotor verbundenen Antriebshohlwelle 34 über entsprechend der geschalteten Splitgruppe in Eingriff stehende Zahnradpaare auf die Zwischenwelle 38 und von dort auf die als Hohlwelle 19 ausgebildete Abtriebswelle zum nachgeschalteten Wechselgetriebe. Durch die in der Seitenansicht dargestellte Splitgruppe ist nur eine Schaltstange der beiden parallel zueinander angeordneten Schaltstangen 5, 6 die Schaltstange 5 sichtbar. Am Ende dieser Schaltstange 5 sind jeweils die Stellzylinder 10, 11 angeordnet, die jedoch im Unterschied zu den in Fig. 2 dargestellten Kolben 27, 28 unterschiedliche Durchmesser aufweisen und darüber hinaus lediglich ein Kolben auf der Schaltstange 5 beweglich angeordnet ist. Damit wird eine weitere Gestaltungsmöglichkeit des erfindungsgemäßen Stellzylinders aufgezeigt. Die kompakt gebaute, zu einer Einheit zusammengefügte Splitgruppe 24 mit der hydraulischen Schaltung bietet darüber hinaus die Möglichkeit, daß alle erforderlichen Anschluß- bzw. Verbindungsleitungen für die Druckbaufschlagung der einzelnen Zylinderräume bis zum Stirndeckel 37 geführt sind und dort über eine nicht gezeigte Trennstelle zentral an die weiterführenden Leitungen anschließbar sind. Diese Gestaltung unterstreicht die montagefreundliche Gestaltung der zu einer Einheit zusammengefügten Splitgruppe 24.

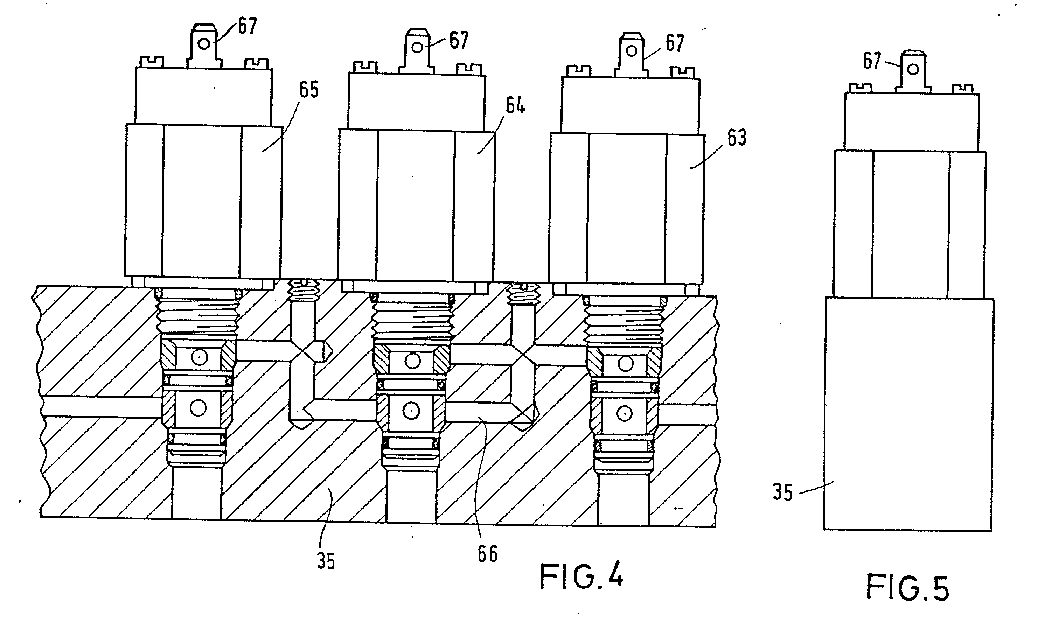

Die kompakte Bauart der vorgestellten hydraulischen Splitgruppenschaltung unterstreichend sind in Fig. 4 und Fig. 5, die als zu einer Einheit zusammengefügten, jeweils für eine Schaltstange zusammenwirkenden Wegeventile dargestellt. Die als Steckmodul 63, 64, 65 als Einsteck- bzw. Einschraubpatrone ausgebildete Einheit, die auch als Cartige-Einschraubpatrone bezeichnet werden, beinhalten die zusammenwirkenden Wegeventile 47 und 49 bzw. 48 und 50. Die Steckmodule 63, 64, 65, eingesetzt in ein mit entsprechenden Steuerbohrungen 66 versehenes Getriebegehäuse 35, ermöglichen neben der schnellen Montage und Demontage den Verzicht von Verbindungsleitungen und somit Verringerung von aufkommenden Störquellen. Die in Fig. 3 dargestellte Einschubeinheit kombiniert mit den Steckmodulen ermöglichen die Realisierung der neu vorgestellten hydraulischen Getriebeschaltung ohne die Verwendung von Druckmittelleitungen. Die ebenfalls zur Verstellung der Wegeventile mit in den Steckmodulen 63 bis 65 integrierten elektrischen Hubmagneten sind über elektrische Steckkontakte 67 mit der Spannungsquelle 40 verbindbar.

**Ansprüche**

1. Schalthilfe für ein Zahnradwechselgetriebe eines Fahrzeugs, insbesondere eines Schleppers, versehen mit Steuerungs- und Stellgliedern, die mit einer Druckmittelquelle verbunden sind, vorgesehen zur Verschiebung von Schaltstangen und Schaltgabeln,
dadurch gekennzeichnet, daß als Stellglieder ein je mit zwei Kolben (27, 28) und getrennten Zylinderäumen (25, 26) versehener Stellzylinder (10, 11, 12, 13) vorgesehen ist, der in der Längsachse der Schaltstange (5, 6) innerhalb des Getriebegehäuses (35) angeordnet ist und die Schalthilfe hydraulisch erfolgt.

2. Schalthilfe für ein Zahnradwechselgetriebe nach Anspruch 1,
dadurch gekennzeichnet, daß die hydraulische Schalthilfe für eine Splitgruppe vorgesehen ist.

3. Schalthilfe für ein Zahnradwechselgetriebe nach Anspruch 1 oder 2,
dadurch gekennzeichnet, daß die hydraulische Schalthilfe zur Schalthilfe eines Schaltgetriebes einsetzbar ist.

4. Schalthilfe für ein Zahnradwechselgetriebe nach Anspruch 1 oder Anspruch 3,
dadurch gekennzeichnet, daß jede Schaltstange (5, 6) zwei Stellzylinder aufweist, wobei die zylindrisch ausgebildete Schaltstange jeweils die Kolbenstange bildet.

5. Schalthilfe für ein Zahnradwechselgetriebe nach einem der vorhergehenden Ansprüche 1 bis 4,
dadurch gekennzeichnet, daß durch die Verwendung von zwei Stellzylindern pro Schaltstange drei Schaltpositionen für die Schaltgabel (7, 8) erzielbar sind.

6. Schalthilfe für ein Zahnradwechselgetriebe nach einem der vorhergehenden Ansprüche 1 bis 5,
dadurch gekennzeichnet, daß die Kolben (27, 28) im Stellzylinder (10, 11, 12, 13) in Grenzen zueinander verschiebbar sind und ein hydraulisches Schleppgestänge darstellen.

7. Schalthilfe für ein Zahnradwechselgetriebe nach einem der vorhergehenden Ansprüche 1 bis 6,
dadurch gekennzeichnet, daß die Stellzylinder (10, 11, 12, 13) rotationssymmetrische Drehteile darstellen.

8. Schalthilfe für ein Zahnradwechselgetriebe nach einem der vorhergehenden Ansprüche 1 bis 7,
dadurch gekennzeichnet, daß die Stellzylinder einen gleichen Aufbau besitzen und untereinander austauschbar sind.

9. Schalthilfe für ein Zahnradwechselgetriebe nach einem der vorhergehenden Ansprüche 1 bis 8,
dadurch gekennzeichnet, daß die hydraulische Schalthilfe eine Vorrangschaltung aufweist und mit Sensoren (51, 52) in Verbindung steht.

10. Schalthilfe für ein Zahnradwechselgetriebe nach einem der vorhergehenden Ansprüche 1 bis 9,
dadurch gekennzeichnet, daß die Kolbenflächen der Kolben (27, 28) unterschiedlich ausgebildet sind.

11. Schalthilfe für ein Zahnradwechselgetriebe nach einem der vorhergehenden Ansprüche 1 bis 10,
dadurch gekennzeichnet, daß die Schalthilfe durch den Schalthebel (41) auslösbar ist, der in einer Schaltkulisse (42) verschiebbar geführt wird und mit zwei Verbindungen (61, 62) versehen ist, die in jeder Rastung (53, 54) für die einzelne Gruppe bzw. Neutralstellung eine elektrische Verbindung zwischen einer Spannungsquelle (40) und den als Steuerungsglieder ausgebildeten elektro-magnetisch betätigten Wegeventilen (47, 48, 49, 50) herstellen.

12. Schalthilfe für ein Zahnradwechselgetriebe nach einem der vorhergehenden Ansprüche 1 bis 11,
dadurch gekennzeichnet, daß die jeweils zusammenwirkenden Wegeventile (47, 49) bzw. (48, 50) zu einer Einheit zusammengefügt sind und ein Steckmodul bilden.

13. Schalthilfe für ein Zahnradwechselgetriebe nach einem der vorhergehenden Ansprüche 1 bis 12,
dadurch gekennzeichnet, daß die gesamte Splitgruppe einschließlich der hydraulischen Schalthilfe als Einschubeinheit ausgebildet ist.

14. Schalthilfe für ein Zahnradwechselgetriebe nach einem der vorhergehenden Ansprüche 1 bis 13,
dadurch gekennzeichnet, daß die Schalthilfe für ein mit ASM (Antriebsstrang-Management) ausgerüstetes Fahrzeug einsetzbar ist.

KHD AG D88/52

FIG.1

FIG.2

EP 0 368 230 A1

FIG.3

KHD AG D88152

KHD AG D88/52

EP 0 368 230 A1

67   67   67

65

64

63

35   66   FIG.4

67

35   FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 271 234 (EATON CORP.) <br> * Figuren 1,2,4a,4b; Zusammenfassung; Anspruch 1 * | 1,2,3,6 ,7,10, 12 | F 16 H 61/30 |
| Y | * Figur 4a; Anspruch 3 * | 9 | |
| A | | 5,8,14 | |
| A | * Anspruch 9 * <br> --- | 4 | |
| Y | GB-A- 983 271 (TATRA) <br> * Figur 1; Seite 1, Zeilen 13-18,50-71; Ansprüche 1,2 * <br> --- | 1,2,3,6 ,7,9,10 ,12 | |
| A | EP-A-0 085 498 (EATON CORP.) <br> * Figur 5; Zusammenfassung * <br> --- | 4 | |
| A | DE-B-1 155 348 (TATRA) <br> * Figuren 1-3; Ansprüche 1,2 * <br> --- | 1,2,3 | |
| A | FR-A-2 556 291 (ETAT FRANCAIS) <br> * Figuren 2,4; Zusammenfassung; Ansprüche 1-4 * <br> ----- | 1,2,3,5 ,9,12, 14 | |
| | | | **RECHERCHIERTE SACHGEBIETE (Int. Cl.5)** <br><br> F 16 H |

Der vorliegende Recherchenbericht wurde für alle Patentansprüche erstellt

| Recherchenort | Abschlußdatum der Recherche | Prüfer |
|---|---|---|
| DEN HAAG | 12-02-1990 | VINGERHOETS A.J.L. |